Europäisches Patentamt

European Patent Office

Office européen des brevets

(19)

(11) Veröffentlichungsnummer: **0 074 454**
**B1**

(12)

# EUROPÄISCHE PATENTSCHRIFT

(45) Veröffentlichungstag der Patentschrift:
**29.10.86**

(51) Int. Cl.⁴: **B 23 Q 7/04**

(21) Anmeldenummer: **81810377.2**

(22) Anmeldetag: **11.09.81**

(54) Verfahren zum Laden und Entladen von Werkstücken und Vorrichtung zur Durchführung des Verfahrens.

(43) Veröffentlichungstag der Anmeldung:
**23.03.83 Patentblatt 83/12**

(45) Bekanntmachung des Hinweises auf die Patenterteilung:
**29.10.86 Patentblatt 86/44**

(84) Benannte Vertragsstaaten:
**CH DE LI NL**

(56) Entgegenhaltungen:
**DE - A - 1 528 338**
**DE - A - 2 249 501**
**DE - A - 2 338 866**
**DE - A - 2 642 923**
**FR - A - 2 374 119**
**FR - A - 2 448 954**
**GB - A - 1 129 680**
**US - A - 3 575 302**

(73) Patentinhaber: **SAFAG AG, Gurzelenstrasse 31,**
**CH-2500 Biel 4 (CH)**

(72) Erfinder: **Schindler, Kurt, Chemin des Bordons 5,**
**CH-2533 Evilard (CH)**

(74) Vertreter: **Seehof, Michel et al, c/o AMMANN**
**PATENTANWAELTE AG BERN Schwarztorstrasse 31,**
**CH-3001 Bern (CH)**

## Beschreibung

Die vorliegende Erfindung bezieht sich auf ein Verfahren zum Laden und Entladen von Werkstükken und eine Vorrichtung zur Durchführung des Verfahrens mit einer Ladevorrichtung mit einem Lader, der einen Schwenkarm mit einem Spannzangenkopf mit zwei Spannzangen aufweist, wobei der Schwenkarm sowohl in der vertikalen als auch in der horizontalen Richtung bewegbar ist.

Aus der DE-A-2 642 923 ist ein Verfahren zum Laden und Entladen bekannt, das imstande ist, bearbeitete Werkstücke zu entladen und Rohlinge in eine Gewindeschneidmaschine einzusetzen. Die dazu benötigte Vorrichtung arbeitet mit einer Vielzahl von hydraulischen Zylindern um die Greifvorrichtung zu betätigen, wobei die Werkstücke jeweils in der Mitte angepackt werden. Einerseits wird dadurch das Laden und Entladen infolge der Anzahl von zu betätigenden Zylindern kompliziert und andererseits besteht durch das Erfassen der Werkstücke in deren Mitte die Gefahr, diese zu beschädigen, insbesondere wenn es sich um dünne Feinbohrer handelt.

Aus der FR-A-2 448 954 ist die eingangs erwähnte Lade- und Entladevorrichtung bekannt, die fest auf dem Gehäuse der Bearbeitungsmaschine befestigt ist und zudem das fertig bearbeitete Werkstück in der Mitte packt. Ausserdem sind seitens der Spannzangen keine Massnahmen vorgesehen, um Werkstücke mit einem grossen Durchmesserbereich mit der gleichen Spannzange zu behandeln.

Es ist demgegenüber Aufgabe der vorliegenden Erfindung, ein Verfahren zum Laden und Entladen von Werkstücken und eine Vorrichtung zum Durchführen dieses Verfahrens anzugeben, das bei einem für diese Aufgabe relativ einfachen und kompakten Aufbau der Vorrichtung ein schonendes Behandeln der fertig bearbeiteten Werkstücke in einem grossen Durchmesserbereich erlaubt. Ein Verfahren und eine Vorrichtung, die diese Aufgabe lösen, ist in den Ansprüchen 1 bzw. 4 beschrieben, wobei die abhängigen Ansprüche Ausgestaltungen der Erfindung beinhalten.

Die Erfindung wird nun im einzelnen anhand einer Zeichnung von Ausführungsbeispielen näher erläutert werden.

Die Figuren 1 bis 14 zeigen, schematisch dargestellt, eine erfindungsgemässe Ladevorrichtung von verschiedenen Seiten und teilweise im Schnitt, sowie den Arbeitsablauf eines ganzen Lade- und Entladezyklus,

Figur 15 zeigt eine Ansicht eines Ausführungsbeispiels eines Spannzangenkopfes,

Figur 16 zeigt einen Schnitt gemäss XVI–XVI von Figur 15,

Figur 17 zeigt einen Schnitt gemäss XVII–XVII von Figur 16,

Figur 18 zeigt die Hüllkurve einer Spannbacke einer Spannzange, und

Figur 19 zeigt ein fertig bearbeitetes Werkstück.

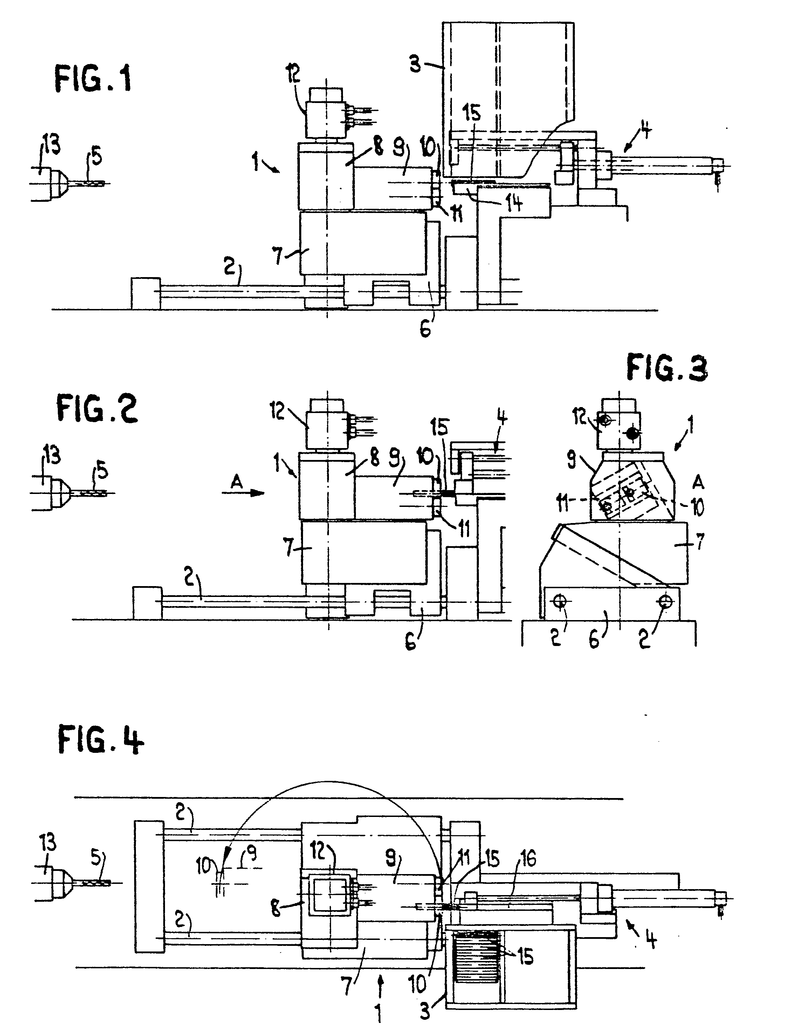

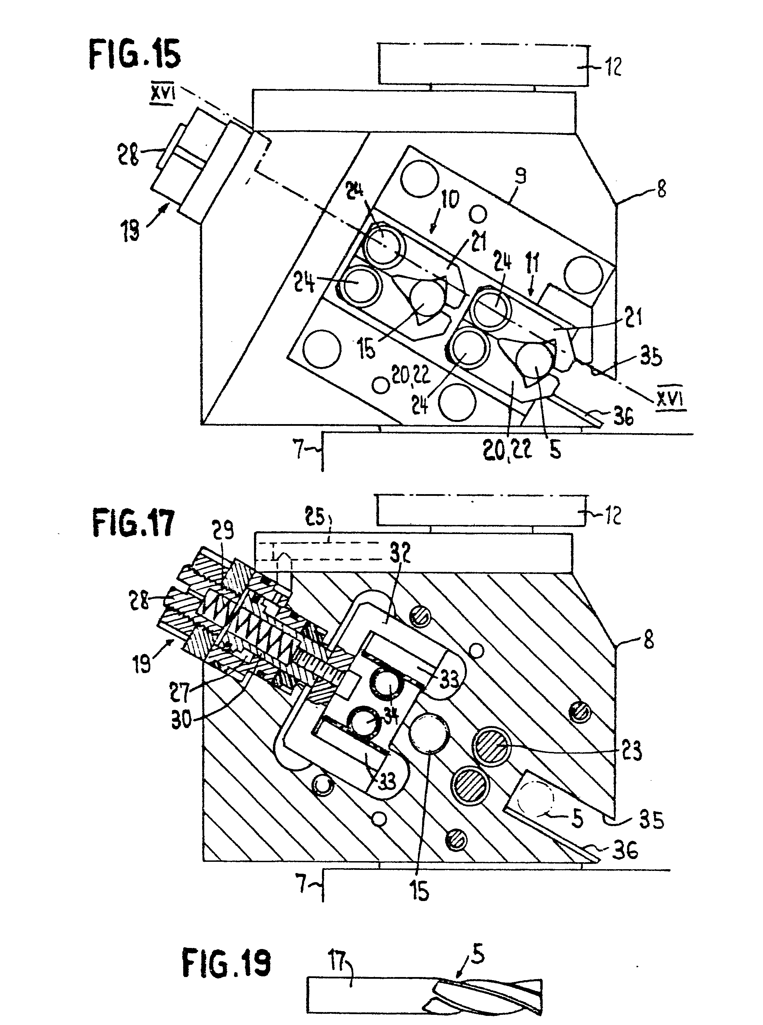

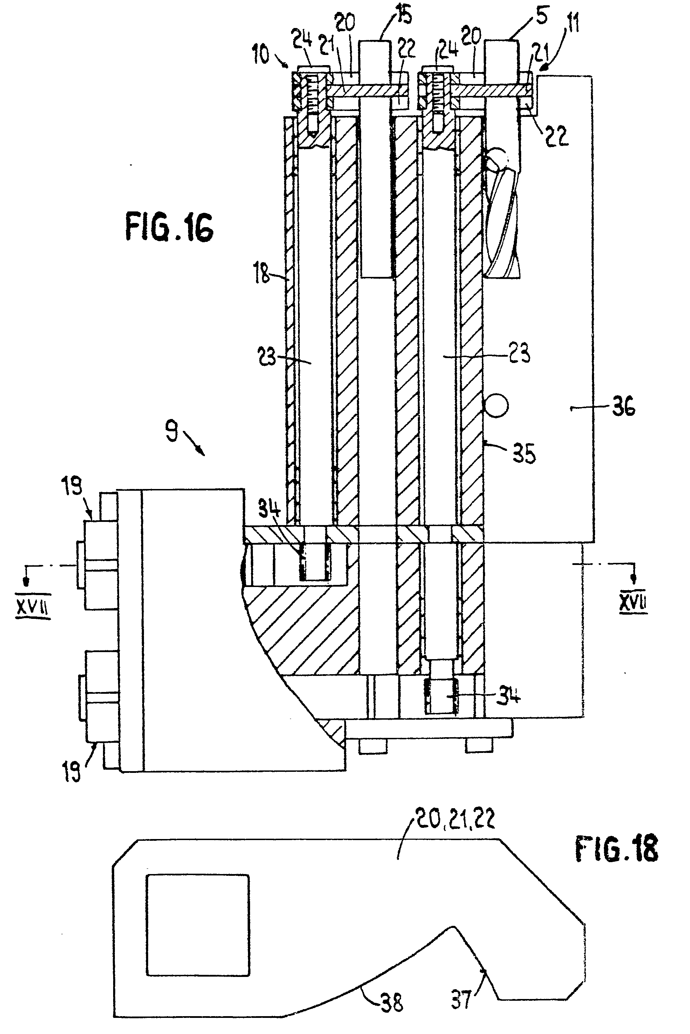

In Figur 1 erkennt man die Ladevorrichtung in Seitenansicht. Diese Vorrichtung enthält im wesentlichen einen auf Führungen 2 laufenden Lader 1, ein Magazin 3 und einen Schieber 4. Auf der Zeichnung links ist ferner ein fertig bearbeitetes Werkstück 5, beispielsweise ein vierzahniger Fräser aus Vollhartmetall gemäss Figur 19 zu erkennen. Solche Vollhartmetallteile mit Durchmessern von einigen Millimetern sind sehr empfindlich gegen Schläge und es entstanden bei vorbekannten Maschinen und Ladevorrichtungen erhebliche Beschädigungen an diesen Stücken, sei es durch Erfassen der Stücke an den Bearbeitungsflächen oder durch unkontrolliertes Hinausstossen derselben. Aus der nachfolgenden Erläuterung der Figuren 1 bis 14 wird hervorgehen, dass die Behandlung der Werkstücke mit dieser Vorrichtung sehr schonend ist.

Darüber befindet sich ein Schwenkarm 8, der einen Spannzangenkopf 9 mit zwei Spannzangen 10 und 11 trägt, wobei ein Ausführungsbeispiel des Spannzangenkopfes gemäss den Figuren 15 bis 17 ausführlich beschrieben werden wird. Über dem Schwenkarm befinden sich die pneumatischen oder hydraulischen und elektrischen Steuerungsorgane 12. Aus den schematischen Figuren 1 bis 14 ist ersichtlich, dass der Spannzangenkopf bezüglich der Arbeitsmaschine eine Hin- und Herund Auf- und Abbewegung ausführen kann, sowie eine Schwenkung um 180°.

Im folgenden wird nun der Arbeitszyklus anhand der Figuren 1 bis 14 dargestellt. In Figur 1 ist folgende Ausgangslage aufgezeichnet: Das Werkzeug 5 ist fertig geschliffen in der Bearbeitungsspannzange 13 der Bearbeitungseinrichtung. Der Hauptschlitten 6 befindet sich in der hintersten Stellung und der Schwenkarm 8 ist nach hinten, d.h. gegen das Magazin 3 geschwenkt. Der Schrägschlitten 7 ist in der unteren Position, der Einstösser 4 in hinterster Position. Der Schieber 14 unter dem Magazin ist in vorderer, d.h. in Einstossposition und durch eine Ladebewegung des Schiebers zurück und vor bestückt worden, wodurch sich der Rohling 15 in der Einstossnute 16, siehe Figur 4, befindet. Dann werden die Klemmbacken der oberen Spannzange 10 geöffnet.

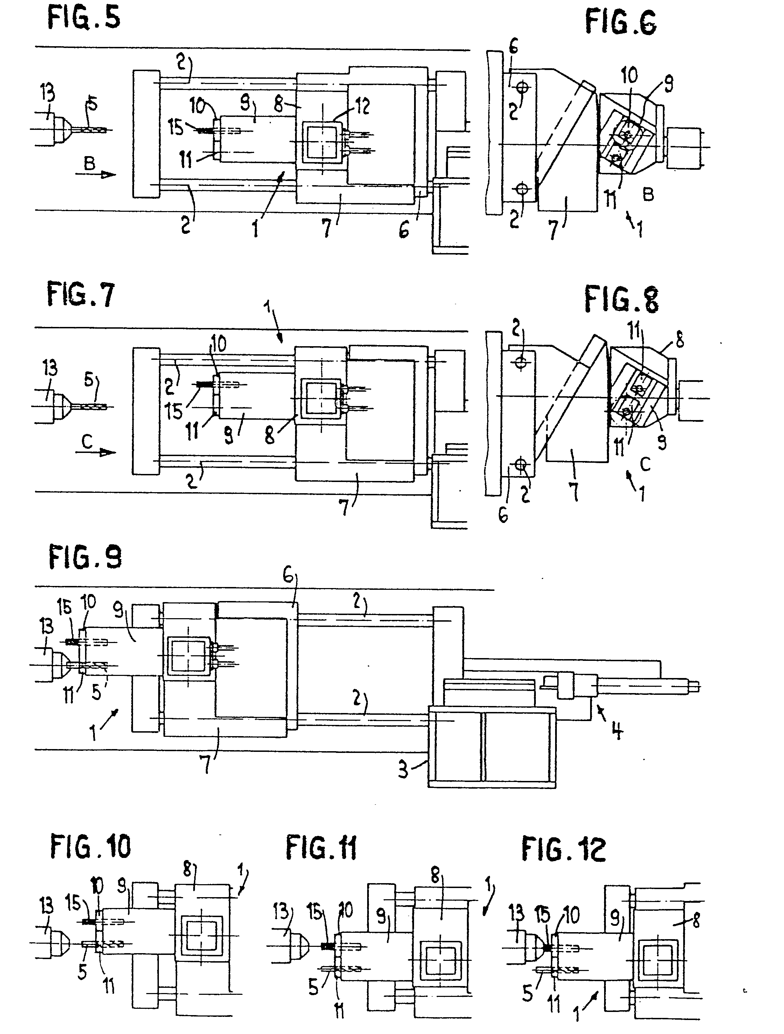

In der Position 2 gemäss den Figuren 2, 3 und 4 geht der Einstösser 4 vor, der Rohling wird durch die Klemmbacken geklemmt und der Einstösser geht wieder zurück, woraufhin der Schwenkarm 8 um 180° nach vorne, d.h. gegen die Bearbeitungsmaschine geschwenkt wird, wodurch Position 3 gemäss den Figuren 5 und 6 erreicht wird.

In Position 4 gemäss den Figuren 7 und 8 wird der Schrägschlitten 7 seitlich nach oben versetzt und in Position 5 gemäss Figur 9 wird der ganze Lader 1 auf dem Hauptschlitten 6 in die vorderste Position gefahren, woraufhin die untere Spannzange 11 das fertige Werkzeug 5 klemmt und die Bearbeitungsspannzange 13 geöffnet wird.

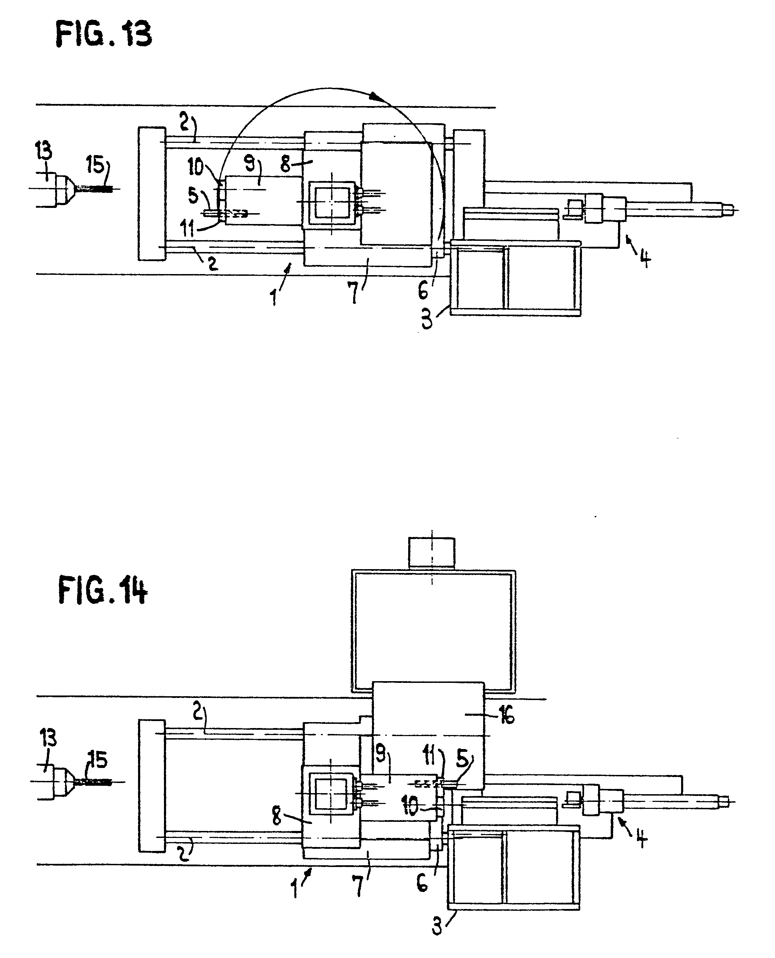

In Position 6, Figur 10, wird der Hauptschlitten zurückgesetzt, bis das fertige Werkzeug aus der Bearbeitungsspannzange ausgefahren ist, dann wird in Position 7, Figur 11, der Schrägschlitten seitlich nach unten versetzt. In Position 8, Figur 12, wird der Hauptschlitten wieder vorgetrieben, der Rohling 15 in die Bearbeitungsspannzange geklemmt, woraufhin in Position 9, Figur 13, die obere Spannzange 10 gelöst wird, der Hauptschlitten in die hinterste Stellung gefahren wird, woraufhin eine Schwenkung des Schwenkarmes um 180° erfolgt. In Position 10 schliesslich, Figur 14, wird die untere Spannzange 11 mit dem fertigen Werkstück 5 gelöst und dieses über ein Auffangblech 16 in einen Stückbehälter oder Förderband entladen, wobei dafür gesorgt wird, dass das fertig bearbeitete Werkzeug nicht beschädigt wird. Massgeblich trägt auch dazu bei, dass das Werkstück immer nur an seinem hinteren Halteteil 17, Figur 19, gefasst wird, so dass die Schneide weitgehendst vor Beschädigung bewahrt wird. Dazu trägt bei, dass der bearbeitete Teil des Werkstückes sich beim Transport innerhalb des Spannzangenkopfes befindet (Figur 16).

Für den rationellen Einsatz von automatisch arbeitenden Maschinen ist die Standzeit, d.h. deren Verkürzung von wesentlicher Bedeutung. Ein grosser Anteil an dieser Standzeit beansprucht die Umrüstung der Maschine, falls Teile mit anderen Dimensionen bearbeitet werden müssen. Wie eingangs bereits erwähnt wurde, ist es eines der Ziele der vorliegenden Erfindung, eine Spannzange anzugeben, mit welcher Werkstücke mit verschiedenen Dimensionen erfasst werden können, ohne dass die Spannzange ausgewechselt werden muss, und dies in einem relativ grossen Bereich. Im folgenden wird nun ein Ausführungsbeispiel eines Spannzangenkopfes im einzelnen anhand der Figuren 15 bis 18 erläutert werden. Man erkennt in Figur 15 den Spannzangenkopf 9, der sich am Schwenkarm 8, siehe Figur 2, befindet, und der mit dem Schrägschlitten 7 verbunden ist. Im Spannzangenkopf 9 sind die Spannzangen 10 und 11 angeordnet. Man erkennt ferner ein am Schwenkarm 8 angeordnete Einstelleinrichtung 19, siehe auch Figur 17. In Figur 16 erkennt man, dass die im Spannzangenkopf 9 angeordneten Spannzangen 10 und 11 je drei Klemmbacken aufweisen, wobei zwei Klemmbacken 20 und 22 als äussere parallel zueinander liegende Klemmbacken und eine Klemmbacke, 21, als dazwischenliegende Gegenklemmbacke angeordnet sind. In Figur 16 erkennt man ferner, dass die Klemmbacken über Antriebsachsen bewegt werden, wobei die mittlere Klemmbacke 21 mit der Antriebsachse 23 verbunden ist und diese antreibt. Die Antriebsachsen für die äusseren Klemmbacken liegen in einer unteren Ebene und sind hier nicht ersichtlich, siehe dazu Figur 17. Die Klemmbacken werden je durch einen Achsbolzen 24 gehalten. Die spezielle Ausgestaltung der Klemmbacken wird anhand der Figur 18 dargelegt werden. Im Schnitt der Figur 17 erkennt man die Steuerung und den Antrieb der Spannzangen. Man erkennt die Druckluft- oder Hydrauliközufuhr, die mit der Steuerkammer 27 im Einstellgehäuse 19 verbunden ist. Die Einstelleinrichtung 19 weist eine durch eine Einstellschraube 28 einstellbare Druckfeder 29 auf, wodurch der relativ sehr kleine Weg der Klemmbacken bestimmt wird. Die Druckluft oder das Hydrauliköl wirkt auf einen Kolbenteil 30, der mit einem Joch 32 verschraubt ist. Die beiden Schenkel des Joches 32 weisen je eine Zahnstange 33 auf, die auf je einen Zahnkranz 34 am Ende der Antriebsachsen 23 wirkt. Wie aus Figur 17 ersehen werden kann, wird das Druckluftmedium nur zum Öffnen der Spannzange beaufschlagt. Dann wirkt dieses Medium auf den Kolbenteil 30 und drückt diesen entgegen der Federkraft nach oben, wodurch die Zahnstangen 33 derart auf die Zahnkränze 34 wirken, dass die Zange geöffnet wird. Die Schliessbewegung erfolgt dann wieder über die Feder 29. Dadurch, dass die Spannbacken mittels der Druckfeder geschlossen werden, wird die Sicherheit der Vorrichtung erhöht und es ist dadurch gewährleistet, dass das Werkstück auch bei Druckabfall sicher gehalten wird.

Man erkennt auf Figur 15 unterhalb der Spannzange 10 die Spannzange 11, die stets das fertig bearbeitete Werkstück greift. Um die Gefahr einer Beschädigung des Werkstückes noch herabzumindern, ist der Auslasskanal 35 an seiner Unterseite mit einer Kunststoffschicht 36 belegt.

Um zu ermöglichen, dass Werkstücke in einem grossen Durchmesserbereich, beispielsweise von 0,5 mm bis 8 mm, mit den gleichen Klemmbacken zentriert erfasst werden können, müssen die Greifkanten 37 bzw. 38 der Klemmbacken profilgeschliffen sein, und zwar so, dass jeder Berührungspunkt mit den Werkstückdurchmessern, des definierten Bereichs, Tangentialpunkt wird. Alle diese Berührungspunkte bilden die vordere und die hintere Greifkante 37 bzw. 38. Diese geometrische Orte oder der Hüllkurve der Greifkanten sind vom Stellungswinkel bzw. Öffnungswinkel der Greifbacken und vom Radius des Werkstückes abhängig. Dabei schliessen die beiden Greifkanten einen Winkel von angenähert 90° ein. Diese Kurven, resp. Greifkantenprofile lassen sich konstruieren und auf einer Profilschleifmaschine herstellen, wobei die vordere Greifkante 37 konkav und die hintere Greifkante 38 konvex ist. In vorliegendem Beispiel mit Werkstücken mit einem Durchmesser von 0,5 bis 8 mm beträgt der Verstellwinkel zum Öffnen der Zange, für ein Werkstück mit 8 mm Durchmesser gerechnet, 8° und der Schliesswinkel für ein Werkstück von 0,5 mm etwa 18°.

**Patentansprüche**

1. Verfahren zum Laden und Entladen von Werkstücken, mit folgenden Schritten
a) Laden eines Rohlings (15) von einem Magazin (3) auf eine Einschubnut (16),
b) Klemmen des Rohlings (15) mit einer oberen Spannzange (10), die an einen Spannzangenkopf (9) befestigt ist, welcher mit zwei schräg übereinanderliegenden Spannzangen (10, 11) bestückt ist,
c) Schwenken eines Schwenkarms (8) mit dem daran befestigten Spannzangenkopf (9) um 180°,
d) Schräg nach oben Versetzen des Spannzangenkopfes (9),
e) Horizontales Fahren des Spannzangenkopfes (9) in Richtung einer Bearbeitungsspannzange (13), mit Hilfe eines Laders (1), worauf der Schwenkarm (8) mit dem daran befestigten Spannzangenkopf (9) drehbar gelagert ist,

f) Ergreifen eines fertigbearbeiteten Werkstükkes (5) mit der unteren Spannzange (11) und Zurückfahren des Laders (1),

g) Schräg nach unten Versetzen des Spannzangenkopfes (9),

h) Vorfahren des Laders, Einbringen des Rohlings (15) in die Bearbeitungsspannzange (13) und Klemmen des Rohlings (15),

i) Zurückfahren des Laders und Schwenken des Schwenkarmes (8) mit dem Spannzangenkopf um 180° und

k) Entladen des fertigbearbeiteten Werkstückes durch Öffnen der unteren Spannzange (11).

2. Verfahren nach Anspruch 1, dadurch gekennzeichnet, dass das Werkstück (5) stets an seinem hinteren Halteteil (17) ergriffen und gehalten wird.

3. Verfahren nach Anspruch 1 oder 2, dadurch gekennzeichnet, dass die Spannzangen (10, 11) von einer Druckfeder (29) geschlossen gehalten und mittels einem Druckmedium geöffnet werden.

4. Vorrichtung zur Durchführung des Verfahrens nach den Ansprüchen 1 bis 3, mit einem Lader (1), der einen Schwenkarm (8) mit einem Spannzangenkopf (9) mit zwei Spannzangen (10, 11) aufweist, wobei der Schwenkarm (8) sowohl in der vertikalen als auch in der horizontalen Richtung auf Schlitten bewegbar ist, dadurch gekennzeichnet, dass der horizontale Hauptschlitten (6) den Lader (1) und der Schwenkarm (8) mit dem Spannzangenkopf (9) auf einem Schrägschlitten (7) angeordnet ist, der auf dem Hauptschlitten (6) befestigt ist.

5. Vorrichtung nach Anspruch 4, dadurch gekennzeichnet, dass die Spannzangen schräg untereinander angeordnet und voneinander unabhängig betätigbar sind, wobei die untere Spannzange (11) einen mit einer Kunststoffschicht (36) versehenen Ausstosskanal (35) aufweist.

6. Vorrichtung nach Anspruch 4 oder 5, dadurch gekennzeichnet, dass jede Spannzange zwei äussere Spannbacken (20, 22) und eine mittlere Gegenspannbacke (21) aufweist.

7. Vorrichtung nach Anspruch 6, dadurch gekennzeichnet, dass jede Spannbacke (20, 22; 21) eine vordere konkave (37) und etwa in einem Winkel von 90° dazu eine hintere konvexe Greifkante (38) aufweist, die derart gestaltet sind, dass die Werkstücke in einem bestimmten Durchmesserbereich in Abhängigkeit vom Öffnungswinkel der Spannbacken (20, 22, 21) stets zentriert sind.

8. Vorrichtung nach Anspruch 7, dadurch gekennzeichnet, dass die Greifkanten derart gestaltet sind, dass alle Werkstücke mit einem Durchmesser von 0,5 mm bis 8 mm zentriert gehalten sind.

9. Vorrichtung nach einem der Ansprüche 4 bis 8, dadurch gekennzeichnet, dass jede Spannbacke (21) oder jedes Spannbackenpaar (20, 22) einer Spannzange (10, 11) über eine Antriebsachse (23) bewegbar ist und das andere Ende der Antriebsachse mit einem Zahnkranz (34) versehen ist, der von einer an einem Schenkel eines Joches (32) befestigten Zahnstange antreibbar ist, wobei das Joch (32) mit einem Kolbenteil (30) eines Druckzylinders verbunden ist.

10. Vorrichtung nach Anspruch 9, dadurch gekennzeichnet, dass sich auf dem Kolbenteil eine einstellbare Druckfeder (29) abstützt.

**Claims**

1. Method for loading and discharging workpieces with the following steps:

a) loading of a blank (15) from a magazine (3) in an insertion groove (16),

b) clamping of the blank (15) with an upper collet chuck (10) fastened to a collet chuck's head (9) which comprises two collet chucks (10, 11) arranged obliquely one upon the other,

c) rotation of 180° of a pivoting arm (8) with the collet chuck's head (9) fastened to this arm,

d) obliquely upward displacement of the collet chuck's head (9),

e) horizontal displacement of the collet chuck's head (9), in the direction of a working collet chuck (13), by means of a loader (1) on which the pivoting arm (8) with the collet chuck's head (9) fastened to it is rotatively mounted,

f) grasp of a finish-machined work-piece (5) with the lower collet chuck (11) and return of the loader (1),

g) obliquely downward displacement of the collet chuck's head (9),

h) advancing of the loader, bringing the blank (15) in the working collet chuck (13) and clamping of the blank (15),

i) return of the loader and rotation of 180° of the pivoting arm (8) with the collet chuck's head, and

k) discharging of the finish-machined work-piece by opening of the lower collet chuck (11).

2. Method according to claim 1, characterized in that the work-piece (5) is always grasped and held by its rear supporting part (17).

3. Method according to claim 1 or 2, characterized in that the collet chucks (10, 11) are kept closed by a pressure spring (29) and in that they are opened by means of a pressure medium.

4. Device for carrying out the method according to claims 1 to 3 with a loader (1) which comprises a pivoting arm (8) with a collet chuck's head (9) with two collet chucks (10, 11), the pivoting arm (8) being displaceable on chariots in the horizontal direction as well as in the vertical direction, characterized in that the principal horizontal chariot (6) bears the loader (1) and in that the pivoting arm (8) with the collet chuck's head (9) is arranged on an inclined chariot (7) fastened to the principal chariot (6).

5. Device according to claim 4, characterized in that the collet chucks are arranged obliquely one under the other and in that they are controllable independently from each other, the lower collet chuck (11) comprising an ejector channel (35) provided with a layer of synthetic material (36).

6. Device according to claim 4 or 5, characterized in that each collet chuck comprises two clamping jaws (20, 22) and a middle counter clamping jaw (21).

7. Device according to claim 6, characterized in that each clamping jaw (20, 22; 21) comprises a concave front clamping surface (37) and at an angle of 90° from it a convex rear clamping surface (38), said surfaces having such a configuration that within a determined range of diameters, the work-pieces are always centered in dependence of the angle of opening of the clamping jaws (20, 22; 21).

8. Device according to claim 7, characterized in that the clamping surfaces have such a configuration that all work-pieces having a diameter between .5 mm and 8 mm are held centered.

9. Device according to one of the claims 4 to 8, characterized in that each clamping jaw (21) or each pair of clamping jaws (20, 22) of a collet chuck (10) is movable by a driving shaft (23) and in that the other extremity of the driving shaft is provided with a toothed rim (24) capable to be driven by a rack fastened to a branch of a yoke (32) connected to a piston (30) of a pressure cylinder.

10. Device according to claim 9, characterized in that an adjustable pressure spring (29) is supported on the piston.

## Revendications

1. Procédé pour le chargement et le déchargement de pièces avec les étapes suivantes:

a) chargement d'une pièce brute (15) à partir d'un magasin (3) dans une gorge d'insertion 16,

b) serrage de la pièce brute avec une pince de serrage supérieure (10) fixée à une tête de pince de serrage (9) équipée de deux pinces de serrage (10, 11) disposées obliquement l'une au dessus de l'autre,

c) pivotement de 180° d'un bras pivotant (8) avec la tête de pince de serrage (9) fixée à ce bras,

d) déplacement oblique vers le haut de la tête de pince de serrage (9),

e) déplacement horizontal de la tête de pince de serrage (9) en direction d'une pince de serrage de travail (13) à l'aide d'un chargeur (1), sur lequel le bras pivotant (8) avec la tête de pince de serrage (9) qui lui est fixée est monté de manière pivotante,

f) saisie d'une pièce usinée terminée avec la pince de serrage inférieure (11) et retrait du chargeur (1),

g) déplacement oblique vers le bas de la tête de pince de serrage (9),

h) avance du chargeur, apport de la pièce brute (15) dans la pince de serrage de travail (13) et serrage de la pièce brute (15),

i) retrait du chargeur et pivotement du bras pivotant (8) avec la tête de pince de serrage de 180°, et

k) déchargement de la pièce usinée terminée, par ouverture de la pince de serrage inférieure (11).

2. Procédé selon la revendication 1, caractérisé en ce que la pièce à usiner (5) est toujours saisie et tenue par sa partie support arrière (17).

3. Procédé selon la revendication 1 ou 2, caractérisé en ce que les pinces de serrage (10, 11) sont maintenues fermées par un ressort de pression (29) et qu'elles sont ouvertes par un milieu de pression.

4. Dispositif pour la mise en œuvre du procédé selon les revendications 1 à 3, avec un chargeur (1) comprenant un bras pivotant (8) avec une tête de pince de serrage (9) avec deux pinces de serrage (10, 11), le bras pivotant (8) étant déplaceable en direction horizontale ainsi qu'en direction verticale sur des chariots, caractérisé en ce que le chariot principal horizontal (6) porte le chargeur (1) et en ce que le bras pivotant (8) avec la tête de pince de serrage (9) est disposé sur un chariot incliné (7) fixé au chariot principal (6).

5. Dispositif selon la revendication 4, caractérisé en ce que les pinces de serrage sont disposées obliquement l'une sous l'autre et qu'elles sont contrôllable indépendamment l'une de l'autre, la pince de serrage inférieure (11) comprenant un canal d'éjection (35) pourvu d'une couche de matière synthétique (36).

6. Dispositif selon la revendication 4 ou 5, caractérisé en ce que chaque pince de serrage comprend deux mors de serrage extérieurs (20, 22) et un contre-mors de serrage médian (21).

7. Dispositif selon la revendication 6, caractérisé en ce que chaque pince de serrage (20, 22; 21) comprend une surface de serrage concave avant (37), et à un angle de 90° de celui-ci une surface de serrage convexe arrière (38), ces surfaces étant de configuration telle que les pièces à usiner, dans un domaine déterminé de diamètres, sont toujours centrées en dépendance de l'angle d'ouverture des mors de serrage (20, 22; 21).

8. Dispositif selon la revendication 7, caractérisé en ce que les surfaces de serrage sont de configuration telle que toutes les pièces à usiner avec un diamètre de 0.5 mm à 8 mm sont maintenues centrées.

9. Dispositif selon l'une des revendications 4 à 8, caractérisé en ce que chaque mors de serrage (21) ou chaque paire de mors de serrage (20, 22) d'une pince de serrage (10, 11) est déplaçeable par un axe d'entraînement (23) et en ce que l'autre extrémité de l'axe d'entraînement est pourvu d'une couronne dentée (34) qui est susceptible d'être entraînée par une crémaillère fixée à la branche d'un pont (32) connecté à un piston (30) d'un cylindre de pression.

10. Dispositif selon la revendication 9, caractérisé en ce que qu'un ressort de pression réglable (29) s'appuie sur le piston.

**FIG.1**

**FIG.2**

**FIG.3**

**FIG.4**

FIG.5

FIG.6

FIG.7

FIG.8

FIG.9

FIG.10

FIG.11

FIG.12

FIG. 13

FIG. 14

# FIG.15

# FIG.17

# FIG.19

0 074 454

FIG.16

FIG.18

20,21,22